# EUROPÄISCHE PATENTANMELDUNG

(11) **EP 2 221 683 A1**
(43) Veröffentlichungstag der Anmeldung: **25.08.2010**
(21) Anmeldenummer: 09002370.6
(22) Anmeldetag: 19.02.2009
(51) Int. Cl.: G05B 19/042, G05B 19/418, G05B 23/02

(54) **Verfahren und Vorrichtung zur Realisierung einer Diagnosefunktion**

(71) Anmelder: Siemens Aktiengesellschaft, 80333 München (DE)
(72) Erfinder: Dausend, Stefan, 91126 Schwabach (DE); Helmig, Dieter, 90475 Nürnberg (DE); Plattner, Christoph, 90431 Nürnberg (DE); Schindler, Josef, 90489 Nürnberg (DE)

(57) **Zusammenfassung**

Die Erfindung betrifft ein Verfahren zur Realisierung einer Diagnosefunktion in einem Automatisierungssystem, eine Vorrichtung zur Datenhaltung für ein Automatisierungssystem und ein Anzeigegerät

Die Anmeldung beschreibt ein Automatisierungssystem mit einem Diagnoseserver.

Weiterhin wird eine Vorrichtung beschrieben, die alle in dem Automatisierungssystem ermittelten Diagnosedaten vorhält und genau eine Schnittstelle besitzt zum Zugriff auf die vorgehaltenen Diagnosedaten.

Die Anmeldung umfasst außerdem ein Anzeigegerät zur Anzeige von in einem Automatisierungssystem anfallenden Diagnosedaten, wobei die Anzeige der von der Vorrichtung zur Datenhaltung empfangenen Diagnosedaten in dem Anzeigengerät abhängig von der Leistungsklasse des Anzeigengerätes skaliert und angezeigt wird.

## Beschreibung

### Fachgebiet der Erfindung

Die Erfindung betrifft ein Verfahren zur Realisierung einer Diagnosefunktion in einem Automatisierungssystem mit einer Mehrzahl kommunikativ verbundener Automatisierungsgeräte, eine Vorrichtung zur Datenhaltung für ein derart ausgestaltetes Automatisierungssystem und ein Anzeigegerät.

Automatisierungssysteme und darin zusammengefasste Automatisierungsgeräte sind an sich bekannt. Die Anmelderin liefert z. B. die unter der Marke SIMATIC bekannten Automatisierungsgeräte, aber auch komplette Automatisierungslösungen, also Automatisierungssysteme mit derartigen Automatisierungsgeräten, zur Steuerung und/oder Überwachung eines technischen Prozesses.

Automatisierungssysteme umfassen mindestens eine speicherprogrammierbare Steuerung sowie ein Programmiergerät zum Erstellen eines Steuerprogramms für eine derartige speicherprogrammierbare Steuerung. Wesentliche Bestandteile dieser speicherprogrammierbaren Steuerung sind Baugruppen für zentrale Aufgaben (CPU-Einheiten) sowie Signal-, Funktions- und Kommunikationsbaugruppen. Die CPU-Einheit der speicherprogrammierbaren Steuerung arbeitet während des Steuerbetriebs zyklisch ein Steuerprogramm ab, welches ein Programmierer mit einem mit einem Software-Werkzeug versehenen Programmiergerät erstellt und welches zur Lösung einer Automatisierungsaufgabe vorgesehen ist. Ein Steuerprogramm umfasst gewöhnlich Software-Funktionsbausteine, die einen Betrieb der Signal-und/oder Funktions- und/oder Kommunikationsbaugruppen ermöglichen.

Allgemein ist der Begriff "Automatisierungsgerät" für den Gesamtzusammenhang dieser Beschreibung so auszulegen, dass er sämtliche Geräte, Einrichtungen oder Systeme umfasst, also neben z. B. Steuerungen, wie speicherprogrammierbaren Steuerungen, Prozessrechnern, (Industrie-)Computern und dergleichen, auch Antriebssteuerungen und ahnliches, wie sie zur Steuerung, Regelung und/oder Überwachung technischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Heute bestehen Großanlagen als Beispiel für eine Kategorie zu steuernder oder zu überwachender technischer Prozesse in der Regel aus einzelnen, verteilten Teilprozessen, deren Daten jedoch für das Arbeiten in der Gesamtanlage oder im jeweiligen Unternehmen interessant sind. Dazu gehören neben Daten jeglicher Art insbesondere Diagnosedaten, welche für die Wartung der Anlage und zur Fehlerkorrektur erforderlich sind. Diagnosedaten werden aus der Prozessdiagnose und der Systemdiagnose erhoben. Diese Daten werden derzeit abgefragt durch unterschiedliche Diagnosesoftware und auch über verschiedene Zugriffspunkte.

Die erhobenen Diagnosedaten werden entsprechend der Art und der Abfrageweise an verschiedenen Stellen, insbesondere in den zentralen Einheiten (CPU) oder in den Anzeigegeräten (HMI) gehalten.

Dabei wird in der Regel bereits im Engineering festgelegt welches Anzeigengerät die Diagnosedaten erhält. Die anwenderdefinierte Diagnose, d. h. Diagnose, die zur Auswertung der Daten die Bereitstellung eines Auswertungsprogramms durch den Anwender erfordert, läuft vollständig getrennt von der automatischen Diagnose (Systemdiagnose).

Bei der Datenhaltung im Anzeigengerät hängt die angezeigte Diagnoseinformation von der Leistungsklasse des Anzeigengerätes ab d. h. von seinen Anzeigemöglichkeiten wie Bildschirmgröße, Standort und Funktionsumfang des Anzeigegerätes.

Die oben skizzierten Probleme werden heute nur unzureichend gelöst.

Aufgabe der Erfindung ist es, ein Verfahren anzugeben, welches die genannten Nachteile nicht aufweist. Es ist weiterhin Aufgabe der Erfindung, eine Vorrichtung zur Durchführung des Verfahrens anzugeben und ein Anzeigengerät, welches geeignet ist, das erfindungsgemäße Verfahren auszuführen.

### Darstellung der Erfindung

Diese Aufgabe wird gelöst durch ein Verfahren zur Realisierung einer Diagnosefunktion in einem Automatisierungssystem gemäß Patentanspruch 1.

Wesentliche Idee der Erfindung ist, dass alle in dem Automatisierungssystem ermittelten Diagnosedaten in einem Diagnoseserver vorgehalten werden. Die Datenhaltung kann dabei zentral oder dezentral erfolgen.

Vorteilhafte Ausgestaltungen und Weiterbildungen sind in den Unteransprüchen angegeben.

Um einen verursachten Fehler diagnostizieren zu können, ist eine aktuelle gemeinsame Datenhaltung aller Diagnosedaten notwendig. Durch die Verschmelzung von Prozess- und/oder Systemdiagnosedaten kann mittels darauf aufbauender Auswertungs-und Bewertungsroutinen durch Auswertung aller Diagnosedaten nach weitergehenden Ursachen gesucht werden.
Bislang für den Kunden notwendiger Aufwand zur Unterscheidung zwischen Prozess- und Systemfehlern wird so obsolet, eine Unterscheidung ist nicht mehr notwendig.

Eine automatisierte Auswertung der vorgehaltenen Diagnosedaten zur Ermittlung einer Fehlerursache kann leicht erfolgt. Der Abruf der Daten erfolgt von einem beliebigen Anzeigegerät oder auch von einem weiterverarbeitenden Programm von einer beliebigen Stelle des Automatisierungssystems aus.

Durch eine genau definierte Schnittstelle zu den im Diagnoseserver vorgehaltenen Diagnosedaten wird die Diagnose einer Anlage der Ferndiagnose bzw. Fernwartung zugänglich.
Als Ablageort für die Daten kommt eine zentrale Datenbank in Frage. Alternativ dazu ist es auch vorstellbar, dass der Nutzer über geeignete Zugriffsmechanismen einen zentralen Zugriffspunkt erhält, die Daten technisch allerdings weiterhin dezentral abgelegt sind.
Die Daten sind bei dieser Art der Datenhaltung nicht nur konsistent über das ganze System sondern vorteilhafterweise auch aktuell und können über einen zentralen Service abgerufen werden. Der Überblick über alle in der Anlage gewonnenen Diagnosedaten wird erleichtert. Auch aus Sicherheitsaspekten ist eine zentrale Datenhaltung wünschenswert, da der Zugriff unter kontrollierbaren Bedingungen möglich ist (bezüglich Authentifizierung, Autorisierung, gesicherte Datenübertragung etc.).

Die in dem Automatisierungssystem verwendeten Anzeigegeräte können in ihrem Leistungsvermögen sehr unterschiedlich sein hinsichtlich Bildschirmgröße, Auflösung, Standort, Funktionsumfang und Rolle des daran arbeitenden Anwenders. Vorgehaltene Diagnosedaten können erfindungsgemäß an ein Anzeigengerät übermittelt werden und entsprechend den Anzeigemöglichkeiten im Anzeigengerätes skaliert und angezeigt werden.

Die Aufgabe wird weiterhin gelöst durch eine Vorrichtung die alle in dem Automatisierungssystem ermittelten Diagnosedaten vorhält und genau eine Schnittstelle besitzt zum Zugriff auf die vorgehaltenen Diagnosedaten.

Weiterhin wird die Aufgabe gelöst durch ein Anzeigegerät zur Anzeige von in einem Automatisierungssystem anfallenden Diagnosedaten, wobei die Anzeige der von der Vorrichtung zur Datenhaltung empfangenen Diagnosedaten in dem Anzeigengerät abhängig von der Leistungsklasse des Anzeigengerätes skaliert (soweit nötig) und angezeigt wird.

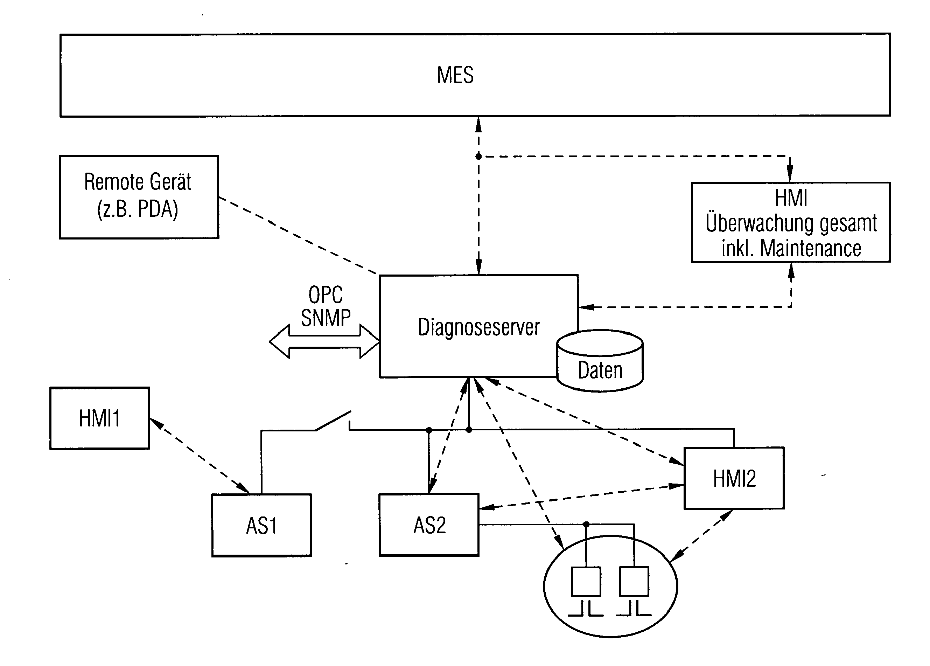

Im Folgenden wird die Erfindung anhand eines Ausführungsbeispieles erläutert. Dabei zeigt
die Figur ein erfindungsgemäßes System mit Diagnoseserver.

### Beschreibung der bevorzugten Ausgestaltungsformen

Als Manufacturing Execution System (MES) wird ein prozessnah operierendes Fertigungsmanagementsystem bezeichnet, synonym wird auch der deutsche Begriff Produktionsleitsystem verwendet. Es zeichnet sich durch die direkte Anbindung an die Automatisierungssysteme aus und ermöglicht die Kontrolle der Produktion in Echtzeit. Dazu gehören klassische Datenerfassungen und Aufbereitungen wie Betriebsdatenerfassung, Maschinendatenerfassung und Personaldatenerfassung, aber auch alle anderen Prozesse, die eine zeitnahe Auswirkung auf den Fertigungs-/Produktionsprozess haben.

Mittels eines Anlagenbusses sind die Automatisierungs(teil)systeme AS1, AS2, verbunden.
Die Anzeigengeräte HMI, HMI1, HMI2 werden auch Mensch-Maschine-Schnittstelle (Human-Machine-Interface) genannt und erlauben dem Bediener das Bedienen der Maschinen, das Beobachten der Anlagenzustände und falls erforderlich das Eingreifen in den Prozess. Es ist auch denkbar, dass die Anzeige der Werte mittels eines Mehrzweckgerätes, Remote Gerät, z. B. PDA erfolgt. Eine Anbindung der Anzeigengeräte ist dabei derzeit über Datenverbindungen in verschiedenster Art und Weise möglich. Die Bereitstellung der Informationen erfolgt entweder hardwaretechnisch über Bedienpulte mit Signallampen, Anzeigefeldern und Tastern oder softwaretechnisch über ein Visualisierungssystem, das auf einem Terminal läuft.
Der Diagnoseserver enthält eine Datenbasis mit Systemdiagnose-, Prozessdiagnose- und Maintenance Daten. Mittels einer zentralen Schnittstelle beispielsweise über die standardisierten Protokolle OPC (OLE for Process Control), SNMP (Simple Network Management Protocol) oder ähnliches wird ein zentraler Zugang zu den gespeicherten Daten angeboten.

Wenn man beispielsweise in einer Fertigungsstraße durch Prozessdiagnose fest stellt, dass die Produkte vom Band fallen, so ist die Ursache des Fehlers allein durch diese Information noch nicht zu finden. Wird weiterhin in der Systemdiagnose angezeigt, dass eine Lichtschranke verschmutzt ist, so kann als Ursache für den auftretenden Fehler der herunterfallenden Produkte die defekte Lichtschranke in Zusammenhang gebracht werden.

## Patentansprüche

1. Verfahren zur Realisierung einer Diagnosefunktion in einem Automatisierungssystem welches zumindest eine Baugruppe für zentrale Aufgaben und zumindest ein Anzeigengerät (HMI) umfasst
**dadurch gekennzeichnet, dass**
alle in dem Automatisierungssystem ermittelten Diagnosedaten in einem Diagnoseserver vorgehalten werden.

2. Verfahren nach Patentanspruch 1,
**dadurch gekennzeichnet, dass**
es sich bei den Diagnosedaten um Prozess- und/oder Systemdiagnosedaten handelt.

3. Verfahren nach Patentanspruch 1 oder 2,
**dadurch gekennzeichnet, dass**
eine automatisierte Auswertung der vorgehaltenen Diagnosedaten zur Ermittlung einer Fehlerursache erfolgt.

4. Verfahren nach einem der vorhergehenden Patentansprüche,
**dadurch gekennzeichnet, dass**
nur genau eine Schnittstelle zu den im Diagnoseserver vorgehaltenen Diagnosedaten existiert.

5. Verfahren nach einem der vorhergehenden Patentansprüche,
**dadurch gekennzeichnet, dass**
vorgehaltene Diagnosedaten an ein Anzeigengerät übermittelt werden und entsprechend den Anzeigemöglichkeiten im Anzeigengerätes skaliert und angezeigt werden.

6. Vorrichtung zur Datenhaltung für ein Automatisierungssystem (Diagnoseserver)
**dadurch gekennzeichnet, dass**
die Vorrichtung alle in dem Automatisierungssystem ermittelten Diagnosedaten vorhält und
genau eine Schnittstelle besitzt zum Zugriff auf die vorgehaltenen Diagnosedaten.

7. Vorrichtung zur Datenhaltung für ein Automatisierungssystem nach Patentanspruch 6,
**dadurch gekennzeichnet, dass**
die Vorrichtung Mittel umfasst zur automatisierten Auswertung der Diagnosedaten.

8. Anzeigegerät (HMI) zur Anzeige von in einem Automatisierungssystem anfallenden Diagnosedaten, **dadurch gekennzeichnet, dass**
die Anzeige der von der Vorrichtung zur Datenhaltung empfangenen Diagnosedaten in dem Anzeigengerät abhängig von der Leistungsklasse des Anzeigengerätes skaliert und angezeigt wird.
